(19) Europäisches Patentamt European Patent Office Office européen des brevets

(11) **EP 4 701 022 A1**

(12) **EUROPEAN PATENT APPLICATION**
published in accordance with Art. 153(4) EPC

(43) Date of publication:
**25.02.2026 Bulletin 2026/09**

(21) Application number: 24822561.7

(22) Date of filing: **30.05.2024**

(51) International Patent Classification (IPC):
*H02J 3/24* $^{(2006.01)}$        *H02J 3/38* $^{(2026.01)}$

(86) International application number:
**PCT/CN2024/096450**

(87) International publication number:
**WO 2024/255609 (19.12.2024 Gazette 2024/51)**

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority:  **13.06.2023   CN 202310702731**

(71) Applicant: **Huawei Digital Power Technologies Co., Ltd.
Shenzhen, Guangdong 518043 (CN)**

(72) Inventors:
• **XU, Fei**
  **Shenzhen, Guangdong 518043 (CN)**
• **YU, Xinyu**
  **Shenzhen, Guangdong 518043 (CN)**
• **DU, Yi**
  **Shenzhen, Guangdong 518043 (CN)**
• **XIN, Kai**
  **Shenzhen, Guangdong 518043 (CN)**

(74) Representative: **Maiwald GmbH
Elisenhof
Elisenstraße 3
80335 München (DE)**

(54) **GRID-CONNECTED POWER CONVERTER AND POWER CONTROL METHOD THEREFOR, AND ENERGY STORAGE SYSTEM**

(57) This application provides a grid-connected power converter, a power control method therefor, and an energy storage system. In the grid-connected power converter, a controller is configured to: in response to a frequency of an alternating current power grid being a first frequency, control an output power of a power conversion circuit to be adjusted from a preset reference power to a first power, where the first power is a sum of the preset reference power and a first inertia power. Further, the controller is configured to: in response to the frequency of the alternating current power grid being a second frequency, control the output power of the power conversion circuit to be adjusted from the first power to a second power, where the second power is a sum of the first power and a first frequency regulation power, and an absolute value of a difference between the second frequency and a utility frequency of the alternating current power grid is greater than an absolute value of a difference between the first frequency and the utility frequency of the alternating current power grid. According to this application, the alternating current power grid can obtain more stable and accurate frequency support.

FIG. 2

**EP 4 701 022 A1**

**Description**

This application claims priority to Chinese Patent Application No. 202310702731.X, filed with the China National Intellectual Property Administration on June 13, 2023 and entitled "GRID-CONNECTED POWER CONVERTER, POWER CONTROL METHOD THEREFOR, AND ENERGY STORAGE SYSTEM", which is incorporated herein by reference in its entirety.

**TECHNICAL FIELD**

This application relates to the field of photovoltaic energy storage technologies, and in particular, to a grid-connected power converter, a power control method therefor, and an energy storage system.

**BACKGROUND**

In photovoltaic power generation or energy storage power generation, as a quantity of alternating current loads changes, a balance between a power output through photovoltaic power generation or energy storage power generation and a required power of the alternating current load is broken, resulting in an unstable frequency of an alternating current. For example, the alternating current is connected to an alternating current power grid. When a frequency of the alternating current is less than 50 Hz, it indicates that the power output through photovoltaic power generation or energy storage power generation is less than the required power of the alternating current load; or when a frequency of the alternating current is greater than 50 Hz, it indicates that the power output through photovoltaic power generation or energy storage power generation is greater than the required power of the alternating current load.

To maintain stability of the frequency of the alternating current, currently, a grid forming (Grid Forming, GFM) control manner may be used for controlling a power converter. To be specific, a voltage amplitude and a voltage frequency that are output by the power converter are controlled, to actively provide frequency support for the alternating current power grid. However, in the current grid forming control manner, the power converter cannot provide stable frequency support for the alternating current power grid.

**SUMMARY**

This application provides a grid-connected power converter, a power control method therefor, and an energy storage system, so that a power grid can obtain more stable and accurate frequency support.

According to a first aspect, this application provides a grid-connected power converter. The grid-connected power converter includes a power conversion circuit and a controller. A first end of the power conversion circuit is connected to a direct current source through a direct current bus, and a second end of the power conversion circuit is connected to an alternating current power grid through an alternating current bus.

In a specific implementation, in response to a frequency of the alternating current power grid being a first frequency, the controller controls an output power of the power conversion circuit to be adjusted from a preset reference power to a first power, where the preset reference power is an output power of the power conversion circuit when the alternating current power grid is stable, the first power is a sum of the preset reference power and a first inertia power, and the first inertia power is a power obtained by the power conversion circuit by simulating an inertia feature of a synchronous generator. The first inertia power is usually related to an attribute of the grid-connected power converter and a frequency fluctuation degree of the alternating current power grid. In addition, in response to the frequency of the alternating current power grid being a second frequency, the controller further controls the output power of the power conversion circuit to be adjusted from the first power to a second power, where the second power is a sum of the first power and a first frequency regulation power, and an absolute value of a difference between the second frequency and a utility frequency of the alternating current power grid is greater than an absolute value of a difference between the first frequency and the utility frequency of the alternating current power grid. Further, the first frequency and the second frequency may be fixed values or frequency ranges. Optionally, the utility frequency of the alternating current power grid is a frequency corresponding to the alternating current power grid in a normal operating state.

When the alternating current power grid experiences underfrequency, the first frequency is less than the utility frequency of the alternating current power grid, and a value of the first inertia power is a positive number; and the second frequency is less than the first frequency, and a value of the first frequency regulation power is a positive number. When the alternating current power grid experiences overfrequency, the first frequency is greater than the utility frequency of the alternating current power grid, and a value of the first inertia power is a negative number; and the second frequency is greater than the first frequency, and a value of the first frequency regulation power is a negative number.

When the frequency of the alternating current power grid deviates from the utility frequency of the alternating current power grid, the first inertia power is preferentially added to the preset reference power, so that the alternating current power grid can obtain fast frequency support. When the frequency of the alternating current power grid further deviates from the utility frequency of the alternating current power grid, the first frequency regulation power continues to be added to the preset reference power and the first inertia power, so that the alternating current power grid can obtain more stable and accurate frequency support.

In a possible implementation, when the alternating current power grid experiences underfrequency, the second frequency is less than the utility frequency of the alternating current power grid. When the absolute value of the difference between the second frequency and the utility frequency of the alternating current power grid increases, the first frequency regulation power is increased, in other words, a value of the first frequency regulation power is increased in this case. When the alternating current power grid experiences overfrequency, the second frequency is greater than the utility frequency of the alternating current power grid. When the absolute value of the difference between the second frequency and the utility frequency of the alternating current power grid increases, the first frequency regulation power is decreased, in other words, a value of the first frequency regulation power is decreased in this case. In this way, dynamic frequency support can be provided for the alternating current power grid when an underfrequency degree or an overfrequency degree of the alternating current power grid gradually increases.

In a possible implementation, when the alternating current power grid experiences underfrequency, the second frequency is less than the utility frequency of the alternating current power grid. In this case, the second power is less than or equal to a maximum output power of the power conversion circuit. When the alternating current power grid experiences overfrequency, the second frequency is greater than the utility frequency of the alternating current power grid. In this case, the second power is greater than or equal to a minimum output power of the power conversion circuit. In this way, the output power of the power conversion circuit can fall within a rated secure power range. This improves use security of the grid-connected power converter and reliability of supporting the alternating current power grid.

In a possible implementation, in response to the frequency of the alternating current power grid being a third frequency, the controller controls the output power of the power conversion circuit to be adjusted from the second power to a third power. The third power is a difference between the second power and the first inertia power, and an absolute value of a difference between the third frequency and the utility frequency of the alternating current power grid is greater than the absolute value of the difference between the second frequency and the utility frequency of the alternating current power grid. When the alternating current power grid experiences underfrequency, the third frequency is less than the utility frequency of the alternating current power grid, and the third frequency is less than the second frequency. When the alternating current power grid experiences overfrequency, the third frequency is greater than the utility frequency of the alternating current power grid, and the third frequency is greater than the second frequency. It may be understood that, when the frequency of the alternating current power grid is the third frequency, the first inertia power exits, to provide stable frequency support for the alternating current power grid.

In a possible implementation, in response to the frequency of the alternating current power grid changing from the third frequency to a fourth frequency, the controller controls the output power of the power conversion circuit to be adjusted from the third power to a fourth power. The fourth power is a power obtained after a second inertia power and a second frequency regulation power are added to the third power, and an absolute value of a difference between the fourth frequency and the utility frequency of the alternating current power grid is less than the absolute value of the difference between the third frequency and the utility frequency of the alternating current power grid. The fourth frequency may be a fixed value or a frequency range. When the alternating current power grid experiences underfrequency, the fourth frequency is greater than the third frequency, and the fourth frequency is less than the utility frequency of the alternating current power grid. In this case, a value of the second inertia power is a negative number, and a value of the second frequency regulation power is a positive number. When the alternating current power grid experiences overfrequency, the fourth frequency is less than the third frequency, and the fourth frequency is greater than the utility frequency of the alternating current power grid. In this case, a value of the second inertia power is a positive number, and a value of the second frequency regulation power is a negative number. In this way, according to a same principle, the grid-connected power converter can provide stable and accurate frequency support for the alternating current power grid.

In a possible implementation, when the alternating current power grid experiences underfrequency, the fourth frequency is less than the utility frequency of the alternating current power grid. When the absolute value of the difference between the fourth frequency and the utility frequency of the alternating current power grid decreases, the second frequency regulation power is decreased, in other words, a value of the second frequency regulation power is decreased. When the alternating current power grid experiences overfrequency, the fourth frequency is greater than the utility frequency of the alternating current power grid. When the absolute value of the difference between the fourth frequency and the utility frequency of the alternating current power grid decreases, the second frequency regulation power is increased, in other words, a value of the second frequency regulation power is increased. In this way, dynamic frequency support can be provided for the alternating current power grid when an underfrequency degree or an overfrequency degree of the alternating current power grid gradually decreases.

In a possible implementation, when the alternating current power grid experiences underfrequency, the fourth frequency is less than the utility frequency of the alternating current power grid. In this case, the fourth power is greater than or equal to a minimum output power of the power conversion circuit. When the alternating current power grid experiences overfrequency, the fourth frequency is greater than the utility frequency of the alternating current power grid. In this case, the fourth power is less than or equal to a maximum output power of the power conversion circuit. In this way, the output power of the power conversion circuit can fall within a rated secure power range. This improves use security of the grid-connected power converter and reliability of supporting the alternating current power grid.

In a possible implementation, in response to the frequency of the alternating current power grid changing from the fourth frequency to the utility frequency of the alternating current power grid, the controller controls the output power of the power conversion circuit to be adjusted from the fourth power to the preset reference power. In this way, dynamic frequency support can be provided for the alternating current power grid in a process in which the frequency of the alternating current power grid is gradually restored to the utility frequency of the alternating current power grid.

In a possible implementation, the first frequency regulation power is determined by the controller based on a preset power-frequency droop curve by using the preset reference power, the output power of the power conversion circuit, the frequency of the alternating current power grid, and a preset lower-limit frequency, where the preset lower-limit frequency is a minimum value of the first frequency. In this way, accuracy of a primary frequency regulation power can be higher.

According to a second aspect, this application provides an energy storage system. The energy storage system includes an energy storage battery and the grid-connected power converter according to any one of the first aspect or the possible implementations of the first aspect. The energy storage battery is connected to the first end of the power conversion circuit through the direct current bus. The power conversion circuit outputs an alternating current based on a direct current provided by the energy storage battery; or the power conversion circuit outputs a direct current to the energy storage battery. It may be understood that the grid-connected power converter can provide more stable and accurate frequency support for the alternating current power grid when the alternating current power grid experiences underfrequency or overfrequency. Therefore, power supply reliability and power supply stability of the energy storage system are improved, and applicability is high.

According to a third aspect, this application provides a power control method for a grid-connected power converter. The method includes: in response to a frequency of an alternating current power grid being a first frequency, controlling an output power of the grid-connected power converter to be adjusted from a preset reference power to a first power, where the preset reference power is an output power of the grid-connected power converter when the alternating current power grid is stable, the first power is a sum of the preset reference power and a first inertia power, and the first inertia power is a power obtained by the grid-connected power converter by simulating an inertia feature of a synchronous generator; and in response to the frequency of the alternating current power grid being a second frequency, further controlling the output power of the grid-connected power converter to be adjusted from the first power to a second power, where the second power is a sum of the first power and a first frequency regulation power, and an absolute value of a difference between the second frequency and a utility frequency of the alternating current power grid is greater than an absolute value of a difference between the first frequency and the utility frequency of the alternating current power grid. The first frequency and the second frequency may be fixed values or frequency ranges. Optionally, the utility frequency of the alternating current power grid is a frequency corresponding to the power grid in a normal operating state.

When the frequency of the alternating current power grid deviates from the utility frequency of the alternating current power grid, the first inertia power is preferentially added to the preset reference power, so that the alternating current power grid can obtain fast frequency support. When the frequency of the alternating current power grid further deviates from the utility frequency of the alternating current power grid, the first frequency regulation power continues to be added to the preset reference power and the first inertia power, so that the alternating current power grid can obtain more stable and accurate frequency support.

In a possible implementation, in response to the second frequency being less than the utility frequency of the alternating current power grid, and when the absolute value of the difference between the second frequency and the utility frequency of the alternating current power grid increases, the first frequency regulation power is increased, in other words, a value of the first frequency regulation power is increased in this case. In response to the second frequency being greater than the utility frequency of the alternating current power grid, and when the absolute value of the difference between the second frequency and the utility frequency of the alternating current power grid increases, the first frequency regulation power is decreased, in other words, a value of the first frequency regulation power is decreased in this case. In this way, dynamic frequency support can be provided for the alternating current power grid when an underfrequency degree or an overfrequency degree of the alternating current power grid gradually increases.

In a possible implementation, in response to the second frequency being less than the utility frequency of the alternating current power grid, the second power is controlled to be less than or equal to a maximum output power of the grid-connected power converter. In response to the second frequency being greater than the utility frequency of the alternating current power grid, the second power is controlled to be greater than or equal to a minimum output power of the grid-connected power converter. In this way, the output power of the grid-connected power converter can fall within a rated secure power range. This improves use security of the grid-connected power converter and reliability of supporting the alternating current power grid.

In a possible implementation, in response to the frequency of the alternating current power grid being a third frequency, the output power of the grid-connected power converter is controlled to be adjusted from the second power to a third power. The third power is a difference between the second power and the first inertia power, and an absolute value of a difference between the third frequency and the utility frequency of the alternating current power grid is greater than the absolute value of the difference between the second frequency and the utility frequency of the alternating current power grid. It may be understood that, when the frequency of the alternating current power grid is the third frequency, the first inertia power exits, to provide stable frequency support for the alternating current power grid.

In a possible implementation, in response to the frequency of the alternating current power grid changing from the third frequency to a fourth frequency, the output power of the grid-connected power converter is controlled to be adjusted from the third power to a fourth power. The fourth power is a sum of the third power, a second inertia power, and a second frequency regulation power. An absolute value of a difference between the fourth frequency and the utility frequency of the alternating current power grid is less than the absolute value of the difference between the third frequency and the utility frequency of the alternating current power grid. The fourth frequency herein may be a fixed value or a frequency range. In this way, according to a same principle, the grid-connected power converter can provide stable and accurate frequency support for the alternating current power grid.

In a possible implementation, in response to the fourth frequency being less than the utility frequency of the alternating current power grid, and when the absolute value of the difference between the fourth frequency and the utility frequency of the alternating current power grid decreases, the second frequency regulation power is decreased, in other words, a value of the second frequency regulation power is decreased in this case. In response to the fourth frequency being greater than the utility frequency of the alternating current power grid, and when the absolute value of the difference between the fourth frequency and the utility frequency of the alternating current power grid decreases, the second frequency regulation power is increased, in other words, a value of the second frequency regulation power is increased in this case. In this way, dynamic frequency support can be provided for the alternating current power grid when an underfrequency degree or an overfrequency degree of the alternating current power grid gradually decreases.

In a possible implementation, in response to the fourth frequency being less than the utility frequency of the alternating current power grid, the fourth power is controlled to be greater than or equal to the minimum output power of the grid-connected power converter. In response to the fourth frequency being greater than the utility frequency of the alternating current power grid, the fourth power is controlled to be less than or equal to the maximum output power of the grid-connected power converter. In this way, the output power of the grid-connected power converter can fall within a rated secure power range. This improves use security of the grid-connected power converter and reliability of supporting the alternating current power grid.

In a possible implementation, in response to the frequency of the alternating current power grid changing from the fourth frequency to the utility frequency of the alternating current power grid, the output power of the grid-connected power converter is controlled to be adjusted from the fourth power to the preset reference power. In this way, dynamic frequency support can be provided for the alternating current power grid in a process in which the frequency of the alternating current power grid is gradually restored to the utility frequency of the alternating current power grid.

In a possible implementation, the first frequency regulation power is determined based on a preset power-frequency droop curve by using the preset reference power, the output power of the grid-connected power converter, the frequency of the alternating current power grid, and a preset lower-limit frequency, where the preset lower-limit frequency is a minimum value of the first frequency. In this way, accuracy of a primary frequency regulation power can be higher.

For specific implementations and beneficial effect of the foregoing aspects and possible implementations of the aspects, refer to each other.

## BRIEF DESCRIPTION OF DRAWINGS

FIG. 1 is a block diagram of a structure of an energy storage system according to an embodiment of this application;
FIG. 2 is a diagram of a waveform of an output power of a grid-connected power converter according to an embodiment of this application;
FIG. 3 is a control block diagram of a controller according to an embodiment of this application;
FIG. 4 is a diagram of a control signal flow of a controller according to an embodiment of this application;
FIG. 5 is a diagram of a waveform of an output power of a grid-connected power converter in a conventional technology;
FIG. 6 is a diagram of another waveform of an output power of a grid-connected power converter in a conventional technology;
FIG. 7 to FIG. 15 each are a diagram of still another waveform of an output power of a grid-connected power converter according to an embodiment of this application; and

FIG. 16 is a schematic flowchart of a power control method for a grid-connected power converter according to an embodiment of this application.

**DESCRIPTION OF EMBODIMENTS**

The following clearly and completely describes the technical solutions in embodiments of this application with reference to the accompanying drawings in embodiments of this application. It is clear that the described embodiments are some but not all of embodiments of this application. All other embodiments obtained by a person of ordinary skill in the art based on embodiments of this application without creative efforts shall fall within the protection scope of this application.

Implementations of the technical solutions of this application are further described below in detail with reference to the accompanying drawings.

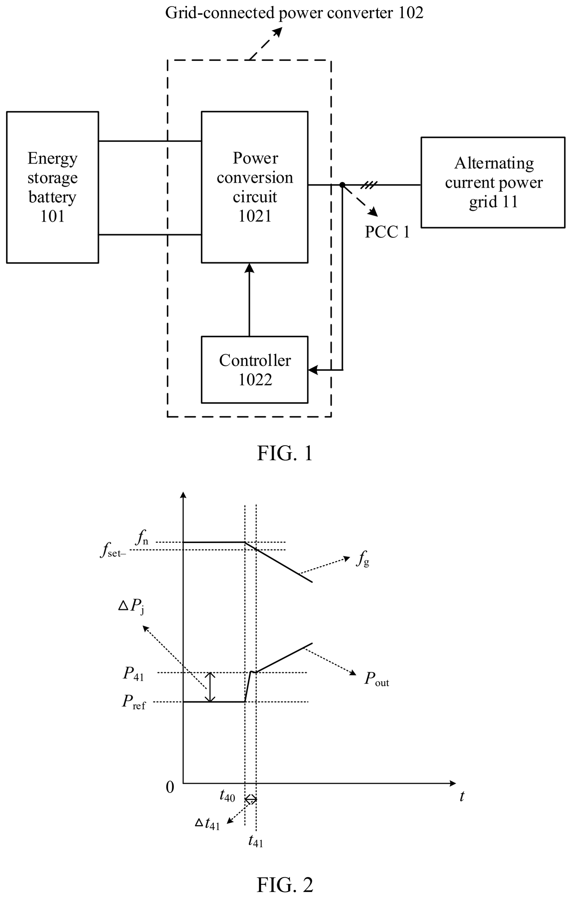

FIG. 1 is a block diagram of a structure of an energy storage system according to an embodiment of this application. As shown in FIG. 1, the energy storage system includes an energy storage battery 101 and a grid-connected power converter 102. The grid-connected power converter 102 includes a power conversion circuit 1021 and a controller 1022.

The energy storage battery 101 is connected to a first end of the power conversion circuit 1021 through a direct current bus. When the energy storage battery 101 discharges, the energy storage battery 101 outputs a direct current to the power conversion circuit 1021. When the energy storage battery 101 is charged, the energy storage battery 101 receives a direct current output by the power conversion circuit 1021. Similarly, the energy storage system shown in FIG. 1 may include a plurality of energy storage batteries, where the plurality of energy storage batteries may be connected in series, in parallel, or in series-parallel and then connected to the first end of the power conversion circuit 1021. In other words, a quantity of energy storage batteries included in the energy storage system is not limited in embodiments of this application.

A second end of the power conversion circuit 1021 is connected to a point of common coupling (Point Of Common Coupling, PCC) 1 through an alternating current bus, where the PCC 1 may be connected to an alternating current power grid 11 or an alternating current load.

A third end of the power conversion circuit 1021 is connected to the controller 1022. The controller 1022 may control the power conversion circuit 1021 to convert, into an alternating current output to the alternating current power grid 11, the direct current output by the energy storage battery 101, and may further convert the alternating current on the alternating current power grid 11 into the direct current output to the energy storage battery 101. In this case, the controller 1022 specifically controls a voltage amplitude and a voltage frequency that are output by the power conversion circuit 1021, that is, the controller 1022 may control an output power of the power conversion circuit 1021. For example, the controller 1022 may be specifically implemented as a micro control unit (Micro Control Unit, MCU), a central processing unit (central processing unit, CPU), another general-purpose processor, a digital signal processor (digital signal processor, DSP), an application-specific integrated circuit (application-specific integrated circuit, ASIC), a field-programmable gate array (field-programmable gate array, FPGA) or another programmable logic device, a discrete gate or a transistor logic device, a discrete hardware component, or the like

In this application, the controller in the grid-connected power converter changes a manner of controlling the power conversion circuit. In a grid forming control manner, more stable and accurate frequency support can be provided for the alternating current power grid when the alternating current power grid experiences underfrequency or overfrequency. Therefore, power supply reliability and power supply stability of the energy storage system are improved, and applicability is high.

The following describes in detail a specific control manner for the power conversion circuit with reference to the accompanying drawings.

In response to a frequency of the alternating current power grid being a first frequency, the controller controls the output power of the power conversion circuit to be adjusted from a preset reference power to a first power. The preset reference power is an output power of the power conversion circuit when the alternating current power grid is stable, the first power is a sum of the preset reference power and a first inertia power, and the first inertia power is a power obtained by the power conversion circuit by simulating an inertia feature of a synchronous generator. The first inertia power is usually related to an attribute of the grid-connected power converter and a frequency fluctuation degree of the alternating current power grid. In addition, in response to the frequency of the alternating current power grid being a second frequency, the controller further controls the output power of the power conversion circuit to be adjusted from the first power to a second power. The second power is a sum of the first power and a first frequency regulation power, and an absolute value of a difference between the second frequency and a utility frequency of the alternating current power grid is greater than an absolute value of a difference between the first frequency and the utility frequency of the alternating current power grid. The first frequency and the second frequency herein may be fixed values or frequency ranges. Optionally, the utility frequency of the alternating current power grid is a frequency corresponding to the alternating current power grid in a normal operating state. For example, the utility frequency of the alternating current power grid may be 50 Hz or 60 Hz.

When the alternating current power grid experiences underfrequency, the first frequency is less than the utility frequency of the alternating current power grid, and a value of the first inertia power is a positive number; and the second frequency is less than the first frequency, and a value of the first frequency regulation power is a positive number. When the alternating current power grid experiences overfrequency, the first frequency is greater than the utility frequency of the alternating current power grid, and a value of the first inertia power is a negative number; and the second frequency is greater than the first frequency, and a value of the first frequency regulation power is a negative number.

It may be understood that, when the frequency of the alternating current power grid deviates from the utility frequency of the alternating current power grid, the first inertia power is preferentially added to the preset reference power, so that the alternating current power grid can obtain fast frequency support. When the frequency of the alternating current power grid further deviates from the utility frequency of the alternating current power grid, the first frequency regulation power continues to be added to the preset reference power and the first inertia power, so that the alternating current power grid can obtain more stable and accurate frequency support.

For example, when the alternating current power grid is in the normal operating state, the frequency of the alternating current power grid is the utility frequency of the alternating current power grid. In this case, the output power of the power conversion circuit is the preset reference power.

When the alternating current power grid experiences underfrequency, a diagram of a waveform of the output power of the power conversion circuit may be as shown in FIG. 2. Herein, $f_n$ is the utility frequency of the alternating current power grid, $f_{set-}$ is a preset lower-limit frequency, $f_g$ is the frequency of the alternating current power grid, $P_{out}$ is the output power of the power conversion circuit, and $P_{ref}$ is the utility frequency of the alternating current power grid. The preset lower-limit frequency is a minimum value of the first frequency. It can be learned that, from a moment $t_{40}$ to a moment $t_{41}$, the frequency of the alternating current power grid is less than the utility frequency $f_n$ of the alternating current power grid and is greater than the preset lower-limit frequency $f_{set-}$. In this case, the controller detects, from the moment $t_{40}$ to the moment $t_{41}$, that the frequency of the alternating current power grid is the first frequency, in other words, the first frequency represents a frequency range from the moment $t_{40}$ to the moment $t_{41}$. If the frequency of the alternating current power grid is less than the preset lower-limit frequency $f_{set-}$ after the moment $t_{41}$, the controller detects, after the moment $t_{41}$, that the frequency of the alternating current power grid is the second frequency.

In a specific implementation, when the controller detects that the frequency of the alternating current power grid is the first frequency, as the absolute value of the difference between the first frequency and the utility frequency $f_n$ of the alternating current power grid increases, the first inertia power is controlled to be increased, until the output power of the power conversion circuit is increased from the preset reference power $P_{ret}$ to the first power $P_{41}$. The first power $P_{41}$ is a sum of the preset reference power $P_{ref}$ and the first inertia power. That the first inertia power is increased means that a value of the first inertia power is increased. In a process in which the frequency of the alternating current power grid is decreased, a value of the first inertia power is a positive number, and is represented as $\Delta P_j$. In this case, the first power $P_{41} = P_{ref} + \Delta P_j$. The first inertia power is responded to at the moment $t_{41}$.

When detecting that the frequency of the alternating current power grid is the second frequency, the controller increases the first frequency regulation power as the absolute value of the difference between the second frequency and the utility frequency $f_n$ of the alternating current power grid increases, in other words, the first frequency regulation power is increased, until the output power of the power conversion circuit is adjusted from the first power $P_{41}$ to the second power. In this way, dynamic frequency support is provided for the alternating current power grid when an underfrequency degree of the alternating current power grid gradually increases. The second power is a sum of the first power $P_{41}$ and the first frequency regulation power. That the first frequency regulation power is increased means that a value of the first frequency regulation power is increased.

It can be learned from FIG. 2 that the output power of the power conversion circuit is obtained by adding the first frequency regulation power to the first power $P_{41}$ starting from the moment $t_{41}$. In a specific implementation, the controller may monitor the output power of the power conversion circuit, and send a control signal to the power conversion circuit when the output power of the power conversion circuit reaches the first power. Optionally, when detecting that the frequency of the alternating current power grid starts to change from the utility frequency of the alternating current power grid to the first frequency, in other words, at the moment $t_{40}$ in FIG. 2, the controller may preset first preset duration, and the first inertia power may be responded to within the first preset duration. Then, the control signal is sent to the power conversion circuit after the first preset duration starting from the moment $t_{40}$. The control signal is used to control the output power of the power conversion circuit to be obtained by adding the first frequency regulation power to the first power $P_{41}$.

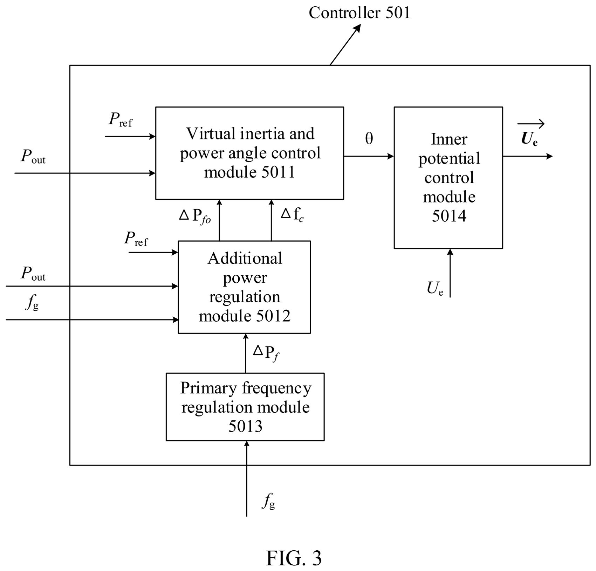

The controller controls the power conversion circuit to preferentially respond to the first inertia power, and then quickly respond to the first frequency regulation power. In a specific implementation, the controller may control the output power of the power conversion circuit according to a control block diagram shown in FIG. 3. As shown in FIG. 3, a controller 501 includes a virtual inertia and power angle control module 5011, an additional power regulation module 5012, a primary frequency regulation module 5013, and an inner potential control module 5014.

When the frequency of the alternating current power grid is greater than the preset lower-limit frequency and less than a preset upper-limit frequency, the virtual inertia and power angle control module 5011 obtains a power angle θ through calculation based on the preset reference power $P_{ref}$ and the output power $P_{out}$ of the power conversion circuit. The preset upper-limit frequency is a maximum value of the first frequency. The inner potential control module 5014 generates an output voltage vector $\overrightarrow{U_e}$ of the power conversion circuit based on the power angle θ and an output voltage amplitude $U_e$ of the power conversion circuit. The power angle θ represents an included angle between the output voltage vector $\overrightarrow{U_e}$ of the power conversion circuit and a voltage vector $\overrightarrow{u_g}$ of an alternating current. In this case, the output power $P_{out}$ of the power conversion circuit controlled by the virtual inertia and power angle control module 5011 may be expressed as follows:

$$P_{out} = \frac{U_e U_g}{X} sin\theta \quad \text{Formula 1}$$

Herein, X is an impedance value between the power conversion circuit and the alternating current power grid or the alternating current load.

It can be learned that both the additional power regulation module 5012 and the primary frequency regulation module 5013 may not operate when the frequency of the alternating current power grid is greater than the preset lower-limit frequency and less than the preset upper-limit frequency.

When the frequency of the alternating current power grid is decreased to the preset lower-limit frequency or the frequency of the alternating current power grid is increased to the preset upper-limit frequency, a power angle θ between an output voltage of the power conversion circuit and a voltage of the alternating current becomes larger or smaller, and the output power $P_{out}$ of the power conversion circuit and a required power of the alternating current power grid or the alternating current load are unbalanced. In this case, the virtual inertia and power angle control module 5011 first generates an inertia power (for example, a first inertia power or a second inertia power). The inertia power is negatively correlated with a variation of the frequency of the alternating current power grid, and a formula may be expressed as follows:

$$\Delta P_j = -K_j . \frac{df_g}{dt} \quad \text{Formula 2}$$

Herein, $K_j$ is a preset inertia power gain value, and $\frac{df_g}{dt}$ represents the variation of the frequency of the alternating current power grid. In a process in which the frequency of the alternating current power grid is decreased, a value of $\frac{df_g}{dt}$ is a negative number. In this case, a value of the first inertia power is a positive number.

In this way, when the frequency of the alternating current power grid is decreased to the preset lower-limit frequency, the output power $P_{out}$ of the power conversion circuit is increased from the preset reference power to the first power within the first preset duration. A specific waveform is a waveform from the moment $t_{40}$ to the moment $t_{41}$ shown in FIG. 3.

When the frequency of the alternating current power grid is decreased to the preset lower-limit frequency or the frequency of the alternating current power grid is increased to the preset upper-limit frequency, the primary frequency regulation module 5013 calculates an active power variation $\Delta P_f$ of the primary frequency regulation module 5013 based on a preset power-frequency droop curve, the frequency of the alternating current power grid, and a preset frequency range. A formula may be expressed as follows:

$$\Delta P_f = \begin{cases} -K_f * (f_g - f_{set+}); & f_g > f_{set+} \\ K_f * (f_g - f_{set-}) ; & f_g < f_{set-} \\ 0 ; & f_{set-} \le f_g \le f_{set+} \end{cases} \quad \text{Formula 3}$$

Herein, $K_f$ is a slope of the preset frequency-power droop curve, $f_{set+}$ is the preset upper-limit frequency, and $f_{set-}$ is the preset lower-limit frequency.

It can be learned from Formula 3 that the active power variation is increased when the frequency of the alternating current power grid is less than the preset lower-limit frequency, and the active power variation is decreased when the frequency of the alternating current power grid is greater than the preset upper-limit frequency.

The additional power regulation module 5012 obtains an active power regulation value and a power angle control value through calculation based on the active power variation $\Delta P_f$ of the primary frequency regulation module 5013, the preset reference power $P_{ref}$, the output power $P_{out}$ of the power conversion circuit, and the frequency $f_g$ of the alternating current power grid. A formula may be expressed as follows:

$$\Delta P_{fo} = \begin{cases} 0 & ; & |\Delta P_{out}| < |\Delta P_j| \\ \Delta P_f & ; & |\Delta P_{out}| \geq |\Delta P_j| \end{cases} \quad \text{Formula 4}$$

Herein, $\Delta P_{fo}$ is the active power regulation value, namely, the first frequency regulation power.

There is a preset function relationship between the power angle control value and the active power regulation value. In this case, the additional power regulation module 5012 may obtain the power angle control value based on the active power regulation value. A formula is expressed as follows:

$$\Delta f_c = \begin{cases} g(|\Delta P_{fo}|); & \Delta P_{fo} \neq 0 \\ 0; & \Delta P_{fo} = 0 \end{cases} \quad \text{Formula 5}$$

Herein, $\Delta f_c$ is the power angle control value, $g(x)$ is a function of $\Delta P_{fo}$, and $g(x) \propto \Delta P_{fo}$. $g(x)$ is determined based on an adding location of $\Delta f_c$.

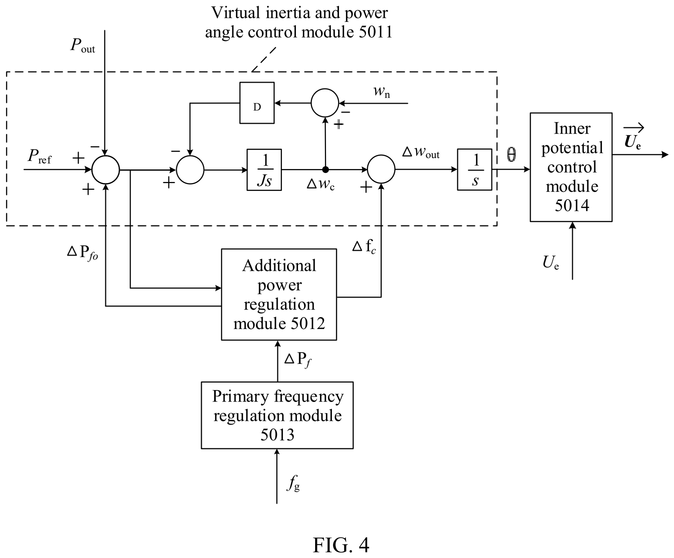

In this case, the additional power regulation module 5012 transmits the active power regulation value and the power angle control value to the virtual inertia and power angle control module 5011. When the virtual inertia and power angle control module 5011 outputs the first inertia power, a signal flow in the virtual inertia and power angle control module 5011 is shown in FIG. 4. The active power regulation value is added to the preset reference power $P_{ref}$, and an added result is transmitted to the additional power regulation module 5012. In addition, the added result is further transmitted to a virtual synchronous generator. In the virtual synchronous generator, D is a damping system, $J_s$ is a virtual rotational inertia, and $w_n$ is a frequency reference value. The virtual synchronous generator performs calculation by using the added result to obtain a power angle variation $\Delta w_c$. The power angle variation $\Delta w_c$ is added to the power angle control value $\Delta f_c$ to obtain a power angle output $\Delta w_{out}$. The virtual inertia and power angle control module 5011 performs an integral operation on the power angle output $\Delta w_{out}$ to obtain a power angle $\theta$. In this case, the inner potential control module 5014 may obtain the output power of the power conversion circuit through calculation according to Formula 1. For example, the output power of the power conversion circuit may alternatively be expressed by a formula:

$$P_{out} = K_{\theta p}.sin\theta \quad \text{Formula 6}$$

Herein, $K_{\theta p}$ is a power angle-to-power transmission gain. $K_{\theta p} = \frac{U_e U_g}{X}$ may be obtained with reference to Formula 1 and Formula 6.

A difference from control on an output power of a power conversion circuit in the conventional technology lies in that, in this embodiment of this application, the additional power regulation module 5012 is added between the primary frequency regulation module 5013 and the virtual inertia and power angle control module 5011. When the frequency of the alternating current power grid is decreased to the preset lower-limit frequency, the first inertia power is preferentially responded to, and then the additional power regulation module 5012 quickly and accurately responds to the first frequency regulation power. It can be learned from FIG. 4 that the additional power regulation module separately outputs the power angle control value and the active power regulation value that are obtained through calculation, where the active power regulation value is processed by the virtual synchronous generator, and the power angle control value is not processed by the virtual synchronous generator.

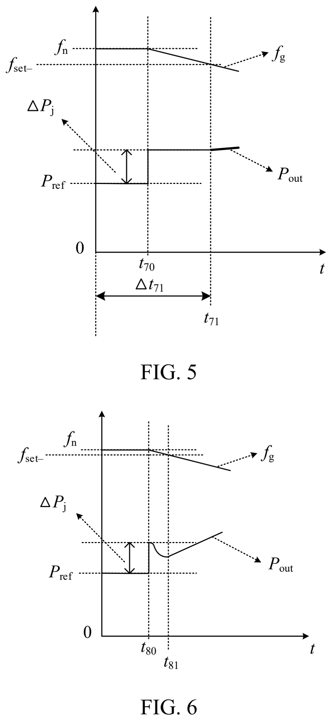

A difference from the conventional technology in which all active power variations output by the primary frequency regulation module are directly added to the preset reference power lies in that, in this embodiment of this application, a virtual inertia exists in the virtual synchronous generator, a response speed of the active power variation output by the primary frequency regulation module is slow, and consequently, the output power of the power conversion circuit cannot be used to quickly provide frequency support for the alternating current power grid or the alternating current load. In this case, for the output power of the power conversion circuit, refer to FIG. 5. FIG. 5 is a diagram of a waveform of an output power of a power converter in the conventional technology. As shown in FIG. 5, at a moment $t_{70}$, a frequency of an alternating current power grid is decreased to a preset lower-limit frequency. However, due to existence of the virtual inertia, an active power variation output by a primary frequency regulation module starts to be added to $P_{ref} + \Delta P_j$ from a moment $t_{71}$. Only an inertia power is used to support the frequency of the alternating current power grid from the moment $t_{70}$ to the moment $t_{71}$, that is, the primary frequency regulation module performs an output on the power conversion circuit only within duration $\Delta t_{71}$ after the frequency of the alternating current power grid is decreased to the preset lower-limit frequency. Because the duration $\Delta t_{71}$ is excessively long, and the duration $\Delta t_{71}$ is far longer than the duration $\Delta t_{41}$ shown in

FIG. 2, the primary frequency regulation module basically fails. To be specific, even if the active power variation is added in the power conversion circuit after the moment $t_{71}$ shown in FIG. 5, the slope of the output power of the power conversion circuit is still quite small and is less than a slope after the moment $t_{41}$ shown in FIG. 2. Therefore, in this embodiment of this application, the power angle control value $\Delta f_c$ obtained by the additional power regulation module 5012 through calculation directly participates in power angle calculation without being processed by the virtual synchronous generator, so that the first frequency regulation power in this embodiment of this application can be quickly responded to.

In the conventional technology, all active power variations output by the primary frequency regulation module are directly used for power angle calculation without being processed by the virtual synchronous generator. In this case, for the output power of the power conversion circuit, refer to FIG. 6. FIG. 6 is a diagram of another waveform of the output power of the power converter in the conventional technology. As shown in FIG. 6, at a moment $t_{80}$, the frequency of the alternating current power grid is decreased to the preset lower-limit frequency, and the active power variation output by the primary frequency regulation module is quickly responded to, so that frequency ride-through occurs on the frequency of the alternating current power grid from the moment $t_{80}$ to a moment $t_{81}$. To be specific, when the frequency of the alternating current power grid changes slightly, the active power variation output by the primary frequency regulation module is quickly responded to and starts to be added in the output power of the power conversion circuit. This destroys an output of the virtual inertia, and is represented as an inertia power loss. Consequently, the primary frequency regulation module does not provide sufficient support for an initial phase in which the frequency of the alternating current power grid is decreased to the preset lower-limit frequency. Therefore, in this embodiment of this application, the active power regulation value $\Delta P_{fo}$ obtained by the additional power regulation module 5012 through calculation is still processed by the virtual synchronous generator, so that the first frequency regulation power in this embodiment of this application is accurately responded to.

In this embodiment of this application, the additional power regulation module is added, and the active power regulation value and the power angle control value are separately calculated based on the output of the primary frequency regulation module. The active power regulation value needs to be processed by the virtual synchronous generator, and the power angle control value does not need to be processed by the virtual synchronous generator. In this way, response speeds and accuracy of the inertia power and a primary frequency regulation power are both considered, so that the alternating current power grid obtains more stable and accurate frequency support.

Optionally, in some feasible implementations, in response to the frequency of the alternating current power grid being a third frequency, the controller controls the output power of the power conversion circuit to be adjusted from the second power to a third power. An absolute value of a difference between the third frequency and the utility frequency of the alternating current power grid is greater than the absolute value of the difference between the second frequency and the utility frequency of the alternating current power grid. When the alternating current power grid experiences underfrequency, the third frequency is less than the utility frequency of the alternating current power grid, and the third frequency is less than the second frequency. When the alternating current power grid experiences overfrequency, the third frequency is greater than the utility frequency of the alternating current power grid, and the third frequency is greater than the second frequency. It may be understood that, when the frequency of the alternating current power grid is the third frequency, the first inertia power exits, to provide stable frequency support for the alternating current power grid.

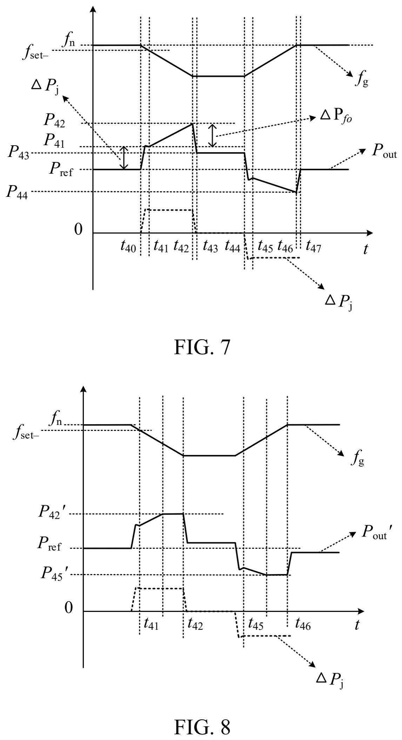

For example, when the alternating current power grid experiences underfrequency, a diagram of a waveform of the output power of the power conversion circuit may be a waveform from a moment $t_{41}$ to a moment $t_{44}$ shown in FIG. 7. A frequency that is of the alternating current power grid and that is detected by the controller from the moment $t_{41}$ to a moment $t_{42}$ is the second frequency, in other words, the second frequency represents a frequency range from the moment $t_{41}$ to the moment $t_{42}$. A frequency that is of the alternating current power grid and that is detected from the moment $t_{42}$ to the moment $t_{44}$ is the third frequency. It can be learned that the third frequency is a fixed value.

In a specific implementation, the output power of the power conversion circuit is obtained by continuously adding the first frequency regulation power (in other words, adding the active power regulation value) from the moment $t_{41}$ to the moment $t_{42}$. In a process in which the frequency of the alternating current power grid is decreased, a value of the first frequency regulation power is a positive number, and is represented as $\Delta P_{fo}$. In this case, the output power of the power conversion circuit may be represented as $P_{ref} + \Delta P_j + \Delta P_{fo}$. The output power of the power conversion circuit reaches the second power $P_{42}$ at the moment $t_{42}$.

It can be learned that the moment $t_{42}$ is a moment at which the frequency of the alternating current power grid is decreased to unchanged, namely, a moment at which a frequency change of the alternating current power grid ends. In this case, the controller controls the output power of the power conversion circuit to start to be decreased at the moment $t_{42}$, and to be decreased to the third power $P_{43}$ at a moment $t_{43}$. The third power $P_{43}$ is a difference between the second power $P_{42}$ and the first inertia power, and the third power $P_{43} = P_{42} - \Delta P_j$. That is, the first inertia power exits when the frequency of the alternating current power grid remains unchanged. In a process in which the frequency of the alternating current power grid remains unchanged, the output power of the power conversion circuit also remains unchanged, and remains the third power $P_{43}$.

Further, in some feasible implementations, in response to the frequency of the alternating current power grid changing from the third frequency to a fourth frequency, the controller controls the output power of the power conversion circuit to be adjusted from the third power to a fourth power. The fourth power is a power obtained after a second inertia power and a second frequency regulation power are added to the third power, and an absolute value of a difference between the fourth frequency and the utility frequency of the alternating current power grid is less than the absolute value of the difference between the third frequency and the utility frequency of the alternating current power grid. The fourth frequency may be a fixed value or a frequency range. When the alternating current power grid experiences underfrequency, the fourth frequency is greater than the third frequency, and the fourth frequency is less than the utility frequency of the alternating current power grid. In this case, a value of the second inertia power is a negative number, and a value of the second frequency regulation power is a positive number. When the alternating current power grid experiences overfrequency, the fourth frequency is less than the third frequency, and the fourth frequency is greater than the utility frequency of the alternating current power grid. In this case, a value of the second inertia power is a positive number, and a value of the second frequency regulation power is a negative number. According to this embodiment of this application, the grid-connected power converter can provide stable and accurate frequency support for the alternating current power grid.

For example, when the alternating current power grid experiences underfrequency, a diagram of an output waveform of the power conversion circuit may be a waveform from a moment $t_{44}$ to a moment $t_{46}$ shown in FIG. 7. It can be learned that, from the moment $t_{44}$ to the moment $t_{46}$, the frequency of the alternating current power grid is increased from unchanged. Although the frequency of the alternating current power grid starts to be increased in this case, the frequency of the alternating current power grid is still less than the utility frequency $f_n$ of the alternating current power grid. In this case, a frequency that is of the alternating current power grid and that is detected by the controller from the moment $t_{44}$ to the moment $t_{46}$ is the fourth frequency, in other words, the fourth frequency represents a frequency range from the moment $t_{44}$ to the moment $t_{46}$, and the fourth frequency is less than the utility frequency $f_n$ of the alternating current power grid.

The moment $t_{44}$ may be understood as a moment at which the frequency of the alternating current power grid starts to be restored, and the output power of the power conversion circuit responds to the second inertia power. Because a value of $\frac{df_g}{dt}$ is a positive number in this case, it may be learned, according to Formula 2, that the value of the second inertia power is a negative number, and is represented as $-\Delta P_j$. In this case, the output power of the power conversion circuit starts to be decreased at the moment $t_{44}$.

The output power of the power conversion circuit is obtained by adding, starting from a moment $t_{45}$, the second frequency regulation power on the basis of responding to the second inertia power. As the absolute value of the difference between the fourth frequency and the utility frequency $f_n$ of the alternating current power grid decreases, the controller decreases the second frequency regulation power, in other words, the second frequency regulation power is decreased in this case, until the output power of the power conversion circuit is adjusted from the third power $P_{43}$ to the fourth power $P_{44}$. In this way, dynamic frequency support is provided for the alternating current power grid when an underfrequency degree of the alternating current power grid gradually decreases. That the second frequency regulation power is decreased means that a value of the second frequency regulation power is decreased.

In addition, it may be learned, according to Formula 3 and Formula 4, that the value of the second frequency regulation power is a positive number, and is represented as $\Delta P_{fo}$. In this case, the fourth power $P_{44} = P_{ref} - \Delta P_j + \Delta P_{fo}$. The fourth power $P_{44}$ is an output power of the power conversion circuit at the moment $t_{46}$. It may be understood that, from the moment $t_{45}$ to the moment $t_{46}$, the output power of the power conversion circuit is a sum of the preset reference power, the second inertia power, and the second frequency regulation power. Because the value of the second inertia power is a negative number, even if the second frequency regulation power is a positive number, an absolute value of the second inertia power is greater than the second frequency regulation power. In this way, the output power of the power conversion circuit is still decreased from the moment $t_{45}$ to the moment $t_{46}$, but in comparison with that from the moment $t_{44}$ to the moment $t_{45}$, the second frequency regulation power whose value is the positive number is added, and a speed of decreasing the output power of the power conversion circuit is slowed down.

Similarly, when the frequency of the alternating current power grid is increased from unchanged, the controller still controls the power conversion circuit to preferentially respond to the second inertia power, and then quickly respond to the second frequency regulation power. In a specific implementation, the control block diagram shown in FIG. 3 may be used for implementation. For details, refer to the foregoing descriptions with reference to FIG. 3. Details are not described herein again.

Further, in some feasible implementations, in response to the frequency of the alternating current power grid changing from the fourth frequency to the utility frequency of the alternating current power grid, the controller controls the output power of the power conversion circuit to be adjusted from the fourth power to the preset reference power. According to this embodiment of this application, dynamic frequency support can be provided for the alternating current power grid in a process in which the frequency of the alternating current power grid is gradually restored to the utility frequency of the alternating current power grid.

In a specific implementation, when the alternating current power grid experiences underfrequency, and the controller detects that the frequency of the alternating current power grid is increased from the fourth frequency to the utility frequency of the alternating current power grid, the controller controls the output power of the power conversion circuit to be increased from the fourth power to the preset reference power. In this case, a diagram of an output waveform of the power conversion circuit may be a waveform after the moment $t_{46}$ shown in FIG. 7. The controller detects, at the moment $t_{46}$, that the frequency of the alternating current power grid is increased to the utility frequency $f_n$ of the alternating current power grid. The moment $t_{46}$ may be understood as a moment at which frequency restoration of the alternating current power grid ends. The second inertia power and the second frequency regulation power start to exit at the moment $t_{46}$, and complete exit at a moment $t_{47}$. In this case, the output power of the power conversion circuit at the moment $t_{47}$ is the preset reference power $P_{ref}$.

Optionally, in some feasible implementations, a power obtained by adding the first frequency regulation power after the power conversion circuit responds to the first inertia power is large. For example, an upper limit of the output power of the power conversion circuit may be limited. Specifically, when the alternating current power grid experiences underfrequency, the second frequency is less than the utility frequency of the alternating current power grid. In this case, the second power is less than or equal to a maximum output power of the power conversion circuit. In this case, a diagram of a waveform of the output power of the power conversion circuit is shown in FIG. 8. It can be learned from FIG. 8 that, from a moment $t_{41}$ to a moment $t_{42}$, the output power of the power conversion circuit is represented as $P_{out}{}'$, and the maximum output power is an upper-limit power $P_{42}{}'$.

Similarly, a power obtained by adding the second frequency regulation power after the power conversion circuit responds to the second inertia power may be small. For example, a lower limit of the output power of the power conversion circuit may be limited. Specifically, when the alternating current power grid experiences underfrequency, the fourth frequency is less than the utility frequency of the alternating current power grid. In this case, the fourth power is greater than or equal to a minimum output power of the power conversion circuit. In this case, it can be learned from FIG. 8 that, from a moment $t_{45}$ to a moment $t_{46}$, the minimum output power of the power conversion circuit is a lower-limit power $P_{45}{}'$.

The maximum output power or the minimum output power of the power conversion circuit may be a preset value, or may be a value determined based on a component used in the grid-connected power converter. For example, the maximum output power or the minimum output power of the power conversion circuit is a maximum output power or a minimum output power of the grid-connected power converter.

According to this embodiment of this application, the output power of the power conversion circuit can fall within a rated secure power range. This improves use security of the grid-connected power converter and reliability of supporting the alternating current power grid.

In the foregoing embodiments described with reference to FIG. 2 to FIG. 8, an example in which the grid-connected power converter outputs a power to the alternating current power grid when the alternating current power grid experiences underfrequency is used, and a direction in which the grid-connected power converter outputs a power to the alternating current power grid is defined as a positive direction. In this case, a curve of the output power of the grid-connected power converter, namely, the power conversion circuit, is above a 0 axis.

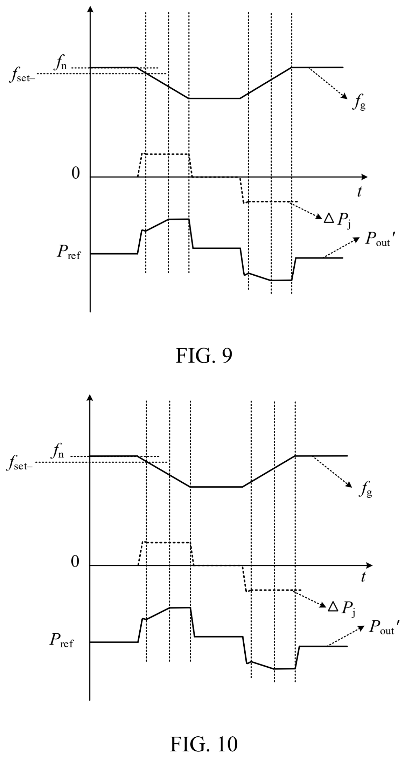

Optionally, in some feasible implementations, when the alternating current power grid experiences underfrequency, the grid-connected power converter may be used in a charging scenario. To be specific, the alternating current power grid outputs a power to the grid-connected power converter, and a direction in which the grid-connected power converter outputs a power to the alternating current power grid is still a positive direction. In this case, a curve of the output power of the power conversion circuit is below a 0 axis. For a diagram of a specific waveform, refer to FIG. 9 and FIG. 10.

FIG. 9 is a diagram of still another waveform of an output power of the grid-connected power converter according to an embodiment of this application. As shown in FIG. 9, a difference between the diagram of the waveform of the output power of the power conversion circuit and the diagram of the waveform shown in FIG. 7 lies in that the output power of the power conversion circuit is less than 0. In a specific implementation, for control on the output power of the power conversion circuit by the controller, refer to the embodiment described in FIG. 7.

Similarly, a difference between a diagram of a waveform shown in FIG. 10 and the diagram of the waveform shown in FIG. 8 lies in that the output power of the power conversion circuit is less than 0. In a specific implementation, for control on the output power of the power conversion circuit by the controller, refer to the embodiment described in FIG. 8.

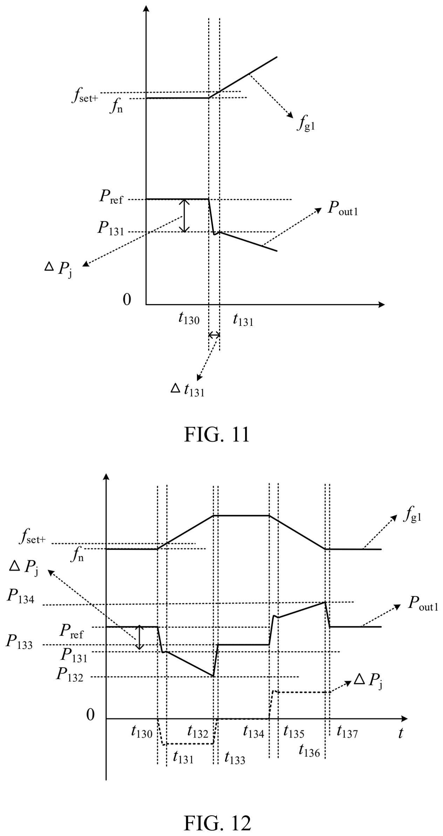

Optionally, in some feasible implementations, when the alternating current power grid experiences overfrequency, a diagram of a waveform of the output power of the power conversion circuit may be as shown in FIG. 11. Herein, $f_n$ is the utility frequency of the alternating current power grid, $f_{set+}$ is a preset upper-limit frequency, $f_{g1}$ is the frequency of the alternating current power grid, $P_{out1}$ is the output power of the power conversion circuit, and $P_{ret}$ is the utility frequency of the alternating current power grid. It can be learned that, from a moment $t_{130}$ to a moment $t_{131}$, the frequency of the alternating current power grid is greater than the utility frequency $f_n$ of the alternating current power grid and is less than the preset upper-limit frequency $f_{sec+}$. In this case, the controller detects, from the moment $t_{130}$ to the moment $t_{131}$, that the frequency of the alternating current power grid is the first frequency, in other words, the first frequency represents a frequency range from the moment $t_{130}$ to the moment $t_{131}$. If the frequency of the alternating current power grid is greater than the preset upper-limit frequency $f_{set+}$ after the moment $t_{131}$, the controller detects, after the moment $t_{131}$, that the frequency of the alternating current power grid is the second frequency.

In a specific implementation, when the controller detects that the frequency of the alternating current power grid is the first frequency, as the absolute value of the difference between the first frequency and the utility frequency $f_n$ of the alternating current power grid increases, the first inertia power is controlled to be decreased, until the output power of the power conversion circuit is decreased from the preset reference power $P_{ret}$ to the first power $P_{131}$. The first power $P_{131}$ is a sum of the preset reference power $P_{ref}$ and the first inertia power. That the first inertia power is decreased may be understood as that a value of the first inertia power is decreased. It can be learned, according to Formula 2, that, in a process in which the frequency of the alternating current power grid is increased, the value of the first inertia power is a negative number, and is represented as $-\Delta P_j$. In this case, the first power $P_{131} = P_{ret} - \Delta P_j$. The first inertia power is responded to at the moment $t_{131}$.

In addition, when detecting that the frequency of the alternating current power grid is the second frequency, the controller decreases the first frequency regulation power as the absolute value of the difference between the second frequency and the utility frequency $f_n$ of the alternating current power grid increases, in other words, the first frequency regulation power is decreased, until the output power of the power conversion circuit is adjusted from the first power $P_{131}$ to the second power. In this way, dynamic frequency support can be provided for the alternating current power grid when an overfrequency degree of the alternating current power grid gradually increases. The second power is a sum of the first power $P_{131}$ and the first frequency regulation power. That the first frequency regulation power is decreased may be understood as that a value of the second frequency regulation power is decreased.

In some feasible implementations, it can be learned from FIG. 11 that the output power of the power conversion circuit is obtained by adding the first frequency regulation power to the first power $P_{131}$ starting from the moment $t_{131}$. In a specific implementation, the controller may monitor the output power of the power conversion circuit, and send a control signal to the power conversion circuit when the output power of the power conversion circuit reaches the first power. Optionally, when detecting that the frequency of the alternating current power grid starts to change from the utility frequency of the alternating current power grid to the first frequency, in other words, at the moment $t_{130}$ in FIG. 11, the controller may preset second preset duration, and the first inertia power may be responded to within the second preset duration. Then, the control signal is sent to the power conversion circuit after the second preset duration starting from the moment $t_{130}$. The control signal is used to control the output power of the power conversion circuit to be obtained by adding the first frequency regulation power to the first power $P_{131}$.

The controller still controls the power conversion circuit to preferentially respond to the first inertia power, and then quickly respond to the first frequency regulation power. For a specific implementation, refer to the foregoing embodiments described with reference to FIG. 3 and FIG. 4. Details are not described herein again.

Further, in some feasible implementations, in response to the frequency of the alternating current power grid being a third frequency, the controller controls the output power of the power conversion circuit to be adjusted from the second power to a third power. For example, when the alternating current power grid experiences overfrequency, a diagram of a waveform of the output power of the power conversion circuit may be a waveform from the moment $t_{131}$ to a moment $t_{134}$ shown in FIG. 11.

A frequency that is of the alternating current power grid and that is detected by the controller from the moment $t_{131}$ to a moment $t_{132}$ is the second frequency, in other words, the second frequency represents a frequency range from the moment $t_{131}$ to the moment $t_{132}$. A frequency that is of the alternating current power grid and that is detected from the moment $t_{132}$ to the moment $t_{134}$ is the third frequency. It can be learned that the third frequency is a fixed value.

In a specific implementation, the output power of the power conversion circuit is obtained by continuously adding the first frequency regulation power (in other words, adding the active power regulation value) from the moment $t_{131}$ to the moment $t_{132}$. In a process in which the frequency of the alternating current power grid is increased, a value of the first frequency regulation power is a negative number, and is represented as $-\Delta P_{fo}$. In this case, the output power of the power conversion circuit may be represented as $P_{ref} - \Delta P_j - \Delta P_{fo}$. The output power of the power conversion circuit reaches the second power $P_{132}$ at the moment $t_{132}$.

It can be learned that the moment $t_{132}$ is a moment at which the frequency of the alternating current power grid is increased to unchanged, namely, a moment at which a change of an alternating current ends. In this case, the output power of the power conversion circuit starts to be increased at the moment $t_{132}$, and is increased to the third power $P_{133}$ at a moment $t_{133}$. The third power $P_{133}$ is a difference between the second power $P_{132}$ and the first inertia power, and the third power $P_{133} = P_{132} + \Delta P_j$. That is, the first inertia power exits when the frequency of the alternating current power grid remains unchanged. In a process in which the frequency of the alternating current power grid remains unchanged, the output power of the power conversion circuit also remains unchanged, and remains the third power $P_{133}$.

Further, in some feasible implementations, in response to the frequency of the alternating current power grid changing from the third frequency to a fourth frequency, the controller controls the output power of the power conversion circuit to be adjusted from the third power to a fourth power. For example, when the alternating current power grid experiences overfrequency, a diagram of an output waveform of the power conversion circuit may be a waveform from a moment $t_{134}$ to a moment $t_{136}$ shown in FIG. 12. It can be learned that, from the moment $t_{134}$ to the moment $t_{136}$, the frequency of the alternating current power grid is decreased from unchanged. Although the frequency of the alternating current power grid starts to be decreased in this case, the frequency of the alternating current power grid is still greater than

the utility frequency $f_n$ of the alternating current power grid. In this case, a frequency that is of the alternating current power grid and that is detected by the controller from the moment $t_{134}$ to the moment $t_{136}$ is the fourth frequency, in other words, the fourth frequency represents a frequency range from the moment $t_{134}$ to the moment $t_{136}$.

The moment $t_{134}$ may be understood as a moment at which the frequency of the alternating current power grid starts to be restored, and the output power of the power conversion circuit responds to the second inertia power. Because a value of $\dfrac{df_g}{dt}$ is a negative number in this case, it may be learned, according to Formula 2, that the value of the second inertia power is a positive number, and is represented as $\Delta P_j$. In this case, the output power of the power conversion circuit starts to be increased at the moment $t_{134}$.

The output power of the power conversion circuit is obtained by adding, starting from a moment $t_{135}$, the second frequency regulation power on the basis of responding to the second inertia power. As the absolute value of the difference between the fourth frequency and the utility frequency $f_n$ of the alternating current power grid gradually decreases, the controller increases the second frequency regulation power, in other words, the second frequency regulation power is increased in this case, until the output power of the power conversion circuit is adjusted from the third power $P_{133}$ to the fourth power $P_{134}$. In this way, dynamic frequency support is provided for the alternating current power grid when an overfrequency degree of the alternating current power grid gradually decreases. That the second frequency regulation power is increased means that a value of the second frequency regulation power is increased.

In addition, it may be learned, according to Formula 3 and Formula 4, that the value of the second frequency regulation power is a negative number, and is represented as $-\Delta P_{fo}$. In this case, the fourth power $P_{134} = P_{ref} + \Delta P_j - \Delta P_{fo}$. The fourth power $P_{134}$ is an output power of the power conversion circuit at the moment $t_{136}$. It may be understood that, from the moment $t_{135}$ to the moment $t_{136}$, the output power of the power conversion circuit is a sum of the preset reference power, the second inertia power, and the second frequency regulation power. Because the value of the second inertia power is a positive number, even if the second frequency regulation power is a negative number, an absolute value of the second inertia power is greater than an absolute value of the second frequency regulation power. In this way, the output power of the power conversion circuit is still increased from the moment $t_{135}$ to the moment $t_{136}$, but in comparison with that from the moment $t_{134}$ to the moment $t_{135}$, the second frequency regulation power whose value is the negative number is added, and a speed of increasing the output power of the power conversion circuit is slowed down.

Similarly, when the frequency of the alternating current power grid is decreased from unchanged, the controller still controls the power conversion circuit to preferentially respond to the second inertia power, and then quickly respond to the second frequency regulation power. In a specific implementation, the control block diagram shown in FIG. 3 may be used for implementation. For details, refer to the foregoing descriptions with reference to FIG. 3. Details are not described herein again.

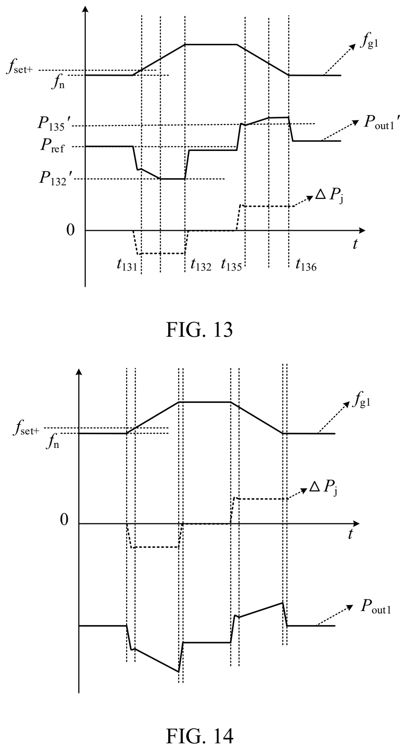

Further, in some feasible implementations, in response to the frequency of the alternating current power grid changing from the fourth frequency to the utility frequency of the alternating current power grid, the controller controls the output power of the power conversion circuit to be adjusted from the fourth power to the preset reference power. In a specific implementation, when the alternating current power grid experiences overfrequency, and the controller detects that the frequency of the alternating current power grid is decreased from the fourth frequency to the utility frequency of the alternating current power grid, the controller controls the output power of the power conversion circuit to be decreased from the fourth power to the preset reference power. In this case, a diagram of an output waveform of the power conversion circuit may be a waveform after a moment $t_{136}$ shown in FIG. 13. The controller detects, at the moment $t_{136}$, that the frequency of the alternating current power grid is decreased to the utility frequency $f_n$ of the alternating current power grid. The moment $t_{136}$ may be understood as a moment at which frequency restoration of the alternating current power grid ends. The second inertia power and the second frequency regulation power start to exit at the moment $t_{136}$, and complete exit at a moment $t_{137}$. In this case, the output power of the power conversion circuit at the moment $t_{137}$ is the preset reference power $P_{ref}$.

Optionally, in some feasible implementations, a power obtained by adding the first frequency regulation power after the power conversion circuit responds to the first inertia power is small. For example, a lower limit of the output power of the power conversion circuit may be limited. Specifically, when the alternating current power grid experiences overfrequency, the second frequency is greater than the utility frequency of the alternating current power grid. In this case, the second power is greater than or equal to a minimum output power of the power conversion circuit. In this case, a diagram of a waveform of the output power of the power conversion circuit is shown in FIG. 13. It can be learned from FIG. 13 that, from a moment $t_{131}$ to a moment $t_{132}$, the output power of the power conversion circuit is represented as $P_{out1}$', and the minimum output power is a lower-limit power $P_{132}$'.

Similarly, a power obtained by adding the second frequency regulation power after the power conversion circuit responds to the second inertia power may be large. For example, an upper limit of the output power of the power conversion circuit may be limited. Specifically, when the alternating current power grid experiences overfrequency, the fourth frequency is greater than the utility frequency of the alternating current power grid. In this case, the fourth power is less than or equal to a maximum output power of the power conversion circuit. In this case, it can be learned from FIG. 13 that, from a moment $t_{135}$ to the moment $t_{136}$, the maximum output power of the power conversion circuit is a lower-limit power $P_{135}'$.

According to this embodiment of this application, the output power of the power conversion circuit can fall within a rated secure power range. This improves use security of the grid-connected power converter and reliability of supporting the alternating current power grid.

In the foregoing embodiments described with reference to FIG. 11 to FIG. 13, an example in which the grid-connected power converter outputs a power to the alternating current power grid when the alternating current power grid experiences overfrequency is used, and a direction in which the grid-connected power converter outputs a power to the alternating current power grid is defined as a positive direction. In this case, a curve of the output power of the grid-connected power converter, namely, the power conversion circuit, is above the 0 axis.

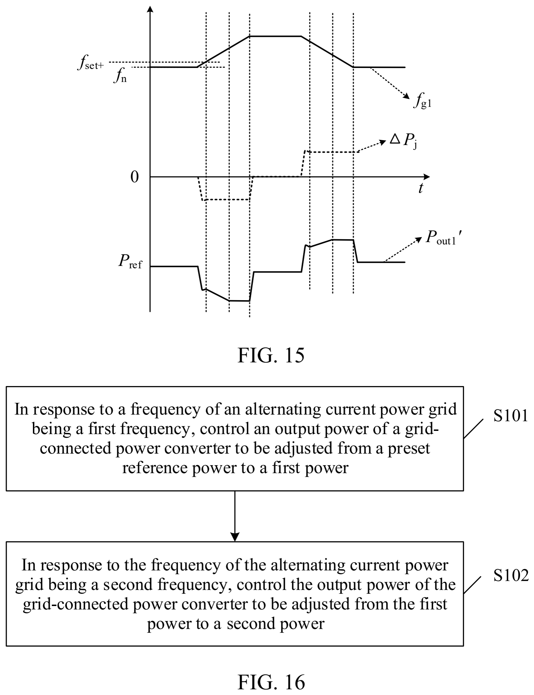

Optionally, in some feasible implementations, when the alternating current power grid experiences overfrequency, the grid-connected power converter may be used in a charging scenario. To be specific, the alternating current power grid outputs a power to the grid-connected power converter, and a direction in which the grid-connected power converter outputs a power to the alternating current power grid is still a positive direction. In this case, a curve of the output power of the power conversion circuit is below a 0 axis. For a diagram of a specific waveform, refer to FIG. 14 and FIG. 15.

FIG. 14 is a diagram of still another waveform of an output power of the grid-connected power converter according to an embodiment of this application. As shown in FIG. 14, a difference between the diagram of the waveform of the output power of the power conversion circuit and the diagram of the waveform shown in FIG. 12 lies in that the output power of the power conversion circuit is less than 0. In a specific implementation, for control on the output power of the power conversion circuit by the controller, refer to the embodiment described in FIG. 12.

Similarly, a difference between a diagram of a waveform shown in FIG. 15 and the diagram of the waveform shown in FIG. 13 lies in that the output power of the power conversion circuit is less than 0. In a specific implementation, for control on the output power of the power conversion circuit by the controller, refer to the embodiment described in FIG. 13.

FIG. 16 is a schematic flowchart of a power control method for a grid-connected power converter according to an embodiment of this application. As shown in FIG. 16, the method includes the following step S101 and step S102.

Step S101: In response to a frequency of an alternating current power grid being a first frequency, control an output power of a grid-connected power converter to be adjusted from a preset reference power to a first power.

The preset reference power is an output power of the grid-connected power converter when the alternating current power grid is stable, the first power is a sum of the preset reference power and a first inertia power, and the first inertia power is a power obtained by the grid-connected power converter by simulating an inertia feature of a synchronous generator.

Step S102: In response to the frequency of the alternating current power grid being a second frequency, control the output power of the grid-connected power converter to be adjusted from the first power to a second power.

The second power is a sum of the first power and a first frequency regulation power, and an absolute value of a difference between the second frequency and a utility frequency of the alternating current power grid is greater than an absolute value of a difference between the first frequency and the utility frequency of the alternating current power grid. The first frequency and the second frequency may be fixed values or frequency ranges. Optionally, the utility frequency of the alternating current power grid is a frequency corresponding to the alternating current power grid in a normal operating state.

In a specific implementation, for a specific implementation of the power control method for the grid-connected power converter provided in this embodiment of this application, refer to the embodiments described in FIG. 1 to FIG. 15. Details are not described herein again. In addition, the output power, a maximum output power, and a minimum output power of the grid-connected power converter in the method respectively correspond to the output power, the maximum output power, and the minimum output power of the power conversion circuit in the embodiments described in FIG. 1 to FIG. 15.

In this embodiment of this application, when the frequency of the alternating current power grid deviates from the utility frequency of the alternating current power grid, the first inertia power is preferentially added to the preset reference power, so that the alternating current power grid can obtain fast frequency support. When the frequency of the alternating current power grid further deviates from the utility frequency of the alternating current power grid, the first frequency regulation power continues to be added to the preset reference power and the first inertia power, so that the alternating current power grid can obtain more stable and accurate frequency support.

It should be noted that the terms "first" and "second" are merely intended for a purpose of description, and shall not be understood as an indication or implication of relative importance.

The foregoing descriptions are merely specific implementations of the present invention, but are not intended to limit the protection scope of the present invention. Any variation or replacement readily figured out by a person skilled in the art within the technical scope disclosed in the present invention shall fall within the protection scope of the present invention. Therefore, the protection scope of the present invention shall be subject to the protection scope of the claims.

**Claims**

1. A grid-connected power converter, wherein the grid-connected power converter comprises a power conversion circuit and a controller, a first end of the power conversion circuit is configured to connect to a direct current source through a direct current bus, and a second end of the power conversion circuit is configured to connect to an alternating current power grid through an alternating current bus;

   the controller is configured to: in response to a frequency of the alternating current power grid being a first frequency, control an output power of the power conversion circuit to be adjusted from a preset reference power to a first power, wherein the preset reference power is an output power of the power conversion circuit when the alternating current power grid is stable, the first power is a sum of the preset reference power and a first inertia power, and the first inertia power is a power obtained by the power conversion circuit by simulating an inertia feature of a synchronous generator; and
   the controller is configured to: in response to the frequency of the alternating current power grid being a second frequency, control the output power of the power conversion circuit to be adjusted from the first power to a second power, wherein the second power is a sum of the first power and a first frequency regulation power, and an absolute value of a difference between the second frequency and a utility frequency of the alternating current power grid is greater than an absolute value of a difference between the first frequency and the utility frequency of the alternating current power grid.

2. The grid-connected power converter according to claim 1, wherein the first frequency regulation power is increased when the second frequency is less than the utility frequency of the alternating current power grid and the absolute value of the difference between the second frequency and the utility frequency of the alternating current power grid increases; or
   the first frequency regulation power is decreased when the second frequency is greater than the utility frequency of the alternating current power grid and the absolute value of the difference between the second frequency and the utility frequency of the alternating current power grid increases.

3. The grid-connected power converter according to claim 2, wherein when the second frequency is less than the utility frequency of the alternating current power grid, the second power is less than or equal to a maximum output power of the power conversion circuit; or
   when the second frequency is greater than the utility frequency of the alternating current power grid, the second power is greater than or equal to a minimum output power of the power conversion circuit.

4. The grid-connected power converter according to any one of claims 1 to 3, wherein the controller is configured to: in response to the frequency of the alternating current power grid being a third frequency, control the output power of the power conversion circuit to be adjusted from the second power to a third power, wherein
   the third power is a difference between the second power and the first inertia power, and an absolute value of a difference between the third frequency and the utility frequency of the alternating current power grid is greater than the absolute value of the difference between the second frequency and the utility frequency of the alternating current power grid.

5. The grid-connected power converter according to claim 4, wherein the controller is configured to: in response to the frequency of the alternating current power grid changing from the third frequency to a fourth frequency, control the output power of the power conversion circuit to be adjusted from the third power to a fourth power, wherein
   the fourth power is a sum of the third power, a second inertia power, and the second frequency regulation power, and an absolute value of a difference between the fourth frequency and the utility frequency of the alternating current power grid is less than the absolute value of the difference between the third frequency and the utility frequency of the alternating current power grid.

6. The grid-connected power converter according to claim 5, wherein the second frequency regulation power is decreased when the fourth frequency is less than the utility frequency of the alternating current power grid and the absolute value of the difference between the fourth frequency and the utility frequency of the alternating current power grid decreases; or
   the second frequency regulation power is increased when the fourth frequency is greater than the utility frequency of the alternating current power grid and the absolute value of the difference between the fourth frequency and the utility frequency of the alternating current power grid decreases.

**7.** The grid-connected power converter according to claim 6, wherein when the fourth frequency is less than the utility frequency of the alternating current power grid, the fourth power is greater than or equal to the minimum output power of the power conversion circuit; or

when the fourth frequency is greater than the utility frequency of the alternating current power grid, the fourth power is less than or equal to the maximum output power of the power conversion circuit.

**8.** The grid-connected power converter according to any one of claims 5 to 7, wherein the controller is configured to: in response to the frequency of the alternating current power grid changing from the fourth frequency to the utility frequency of the alternating current power grid, control the output power of the power conversion circuit to be adjusted from the fourth power to the preset reference power.

**9.** The grid-connected power converter according to any one of claims 1 to 8, wherein the first frequency regulation power is determined by the controller based on a preset power-frequency droop curve by using the preset reference power, the output power of the power conversion circuit, the frequency of the alternating current power grid, and a preset lower-limit frequency, wherein the preset lower-limit frequency is a minimum value of the first frequency.

**10.** An energy storage system, wherein the energy storage system comprises an energy storage battery and the grid-connected power converter according to any one of claims 1 to 9, and the energy storage battery is connected to the first end of the power conversion circuit through the direct current bus; and

the power conversion circuit is configured to output an alternating current based on a direct current provided by the energy storage battery; or the power conversion circuit is configured to output a direct current to the energy storage battery.

**11.** A power control method for a grid-connected power converter, wherein the method comprises:

in response to a frequency of an alternating current power grid being a first frequency, controlling an output power of the grid-connected power converter to be adjusted from a preset reference power to a first power, wherein the preset reference power is an output power of the grid-connected power converter when the alternating current power grid is stable, the first power is a sum of the preset reference power and a first inertia power, and the first inertia power is a power obtained by the grid-connected power converter by simulating an inertia feature of a synchronous generator; and

in response to the frequency of the alternating current power grid being a second frequency, controlling the output power of the grid-connected power converter to be adjusted from the first power to a second power, wherein the second power is a sum of the first power and a first frequency regulation power, and an absolute value of a difference between the second frequency and a utility frequency of the alternating current power grid is greater than an absolute value of a difference between the first frequency and the utility frequency of the alternating current power grid.

**12.** The method according to claim 11, wherein the method further comprises: increasing the first frequency regulation power in response to the second frequency being less than the utility frequency of the alternating current power grid, and when the absolute value of the difference between the second frequency and the utility frequency of the alternating current power grid increases; or

decreasing the first frequency regulation power in response to the second frequency being greater than the utility frequency of the alternating current power grid, and when the absolute value of the difference between the second frequency and the utility frequency of the alternating current power grid increases.

**13.** The method according to claim 12, wherein the method further comprises: in response to the second frequency being less than the utility frequency of the alternating current power grid, controlling the second power to be less than or equal to a maximum output power of the grid-connected power converter; or

in response to the second frequency being greater than the utility frequency of the alternating current power grid, controlling the second power to be greater than or equal to a minimum output power of the grid-connected power converter.

**14.** The method according to any one of claims 11 to 13, wherein the method further comprises:

in response to the frequency of the alternating current power grid being a third frequency, controlling the output power of the grid-connected power converter to be adjusted from the second power to a third power, wherein the third power is a difference between the second power and the first inertia power, and an absolute value of a difference between the third frequency and the utility frequency of the alternating current power grid is greater than the absolute value of the difference between the second frequency and the utility frequency of the alternating current power grid.

15. The method according to claim 14, wherein the method further comprises:

in response to the frequency of the alternating current power grid changing from the third frequency to a fourth frequency, controlling the output power of the grid-connected power converter to be adjusted from the third power to a fourth power, wherein
the fourth power is a sum of the third power, a second inertia power, and the second frequency regulation power, and an absolute value of a difference between the fourth frequency and the utility frequency of the alternating current power grid is less than the absolute value of the difference between the third frequency and the utility frequency of the alternating current power grid.

16. The method according to claim 15, wherein the method further comprises: decreasing the second frequency regulation power in response to the fourth frequency being less than the utility frequency of the alternating current power grid, and when the absolute value of the difference between the fourth frequency and the utility frequency of the alternating current power grid decreases; or
increasing the second frequency regulation power in response to the fourth frequency being greater than the utility frequency of the alternating current power grid, and when the absolute value of the difference between the fourth frequency and the utility frequency of the alternating current power grid decreases.

17. The method according to claim 16, wherein the method further comprises: in response to the fourth frequency being less than the utility frequency of the alternating current power grid, controlling the fourth power to be greater than or equal to the minimum output power of the grid-connected power converter; or
in response to the fourth frequency being greater than the utility frequency of the alternating current power grid, controlling the fourth power to be less than or equal to the maximum output power of the grid-connected power converter.

18. The method according to any one of claims 15 to 17, wherein the method further comprises:
in response to the frequency of the alternating current power grid changing from the fourth frequency to the utility frequency of the alternating current power grid, controlling the output power of the grid-connected power converter to be adjusted from the fourth power to the preset reference power.

19. The method according to any one of claims 11 to 18, wherein the first frequency regulation power is determined based on a preset power-frequency droop curve by using the preset reference power, the output power of the grid-connected power converter, the frequency of the alternating current power grid, and a preset lower-limit frequency, wherein the preset lower-limit frequency is a minimum value of the first frequency.

Grid-connected power converter 102

FIG. 1

FIG. 2

Controller 501

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

In response to a frequency of an alternating current power grid being a first frequency, control an output power of a grid-connected power converter to be adjusted from a preset reference power to a first power

S101

In response to the frequency of the alternating current power grid being a second frequency, control the output power of the grid-connected power converter to be adjusted from the first power to a second power

S102

FIG. 16

## INTERNATIONAL SEARCH REPORT

| International application No. |
| --- |
| **PCT/CN2024/096450** |

| A. | CLASSIFICATION OF SUBJECT MATTER |
| --- | --- |

H02J3/24(2006.01)i; H02J3/38(2006.01)i

According to International Patent Classification (IPC) or to both national classification and IPC

| B. | FIELDS SEARCHED |
| --- | --- |

Minimum documentation searched (classification system followed by classification symbols)

IPC:H02J

Documentation searched other than minimum documentation to the extent that such documents are included in the fields searched

Electronic data base consulted during the international search (name of data base and, where practicable, search terms used)

CNTXT, ENTXT, ENTXTC, DWPI, CNKI: 功率变换器, 并网, 控制器, 储能, 交流, 频率, 惯量功率, 调频, 下垂曲线, power converter, grid-connected, controller, energy storage system, AC, frequency, inertia power, frequency adjustment, sagging curve

| C. | DOCUMENTS CONSIDERED TO BE RELEVANT |
| --- | --- |

| Category* | Citation of document, with indication, where appropriate, of the relevant passages | Relevant to claim No. |
| --- | --- | --- |
| PX | CN 116865294 A (HUAWEI DIGITAL POWER TECHNOLOGIES CO., LTD.) 10 October 2023 (2023-10-10)<br>claims 1-19, description, paragraphs 4-27, and figures 1-16 | 1-19 |
| X | CN 105226719 A (ANHUI POLYTECHNIC UNIVERSITY) 06 January 2016 (2016-01-06)<br>description, paragraphs 40-52, and figures 1-5 | 1-19 |
| A | CN 112968451 A (SHANGHAI JIAO TONG UNIVERSITY) 15 June 2021 (2021-06-15)<br>entire document | 1-19 |
| A | US 11451065 B1 (KING FAHD UNIVERSITY OF PETROLEUM AND MINERALS) 20 September 2022 (2022-09-20)<br>entire document | 1-19 |

☐ Further documents are listed in the continuation of Box C.  ☑ See patent family annex.

| * | Special categories of cited documents: | "T" | later document published after the international filing date or priority date and not in conflict with the application but cited to understand the principle or theory underlying the invention |
| --- | --- | --- | --- |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
| --- | --- |
| **14 August 2024** | **16 August 2024** |

| Name and mailing address of the ISA/CN | Authorized officer |
| --- | --- |
| **China National Intellectual Property Administration (ISA/ CN)**<br>**China No. 6, Xitucheng Road, Jimenqiao, Haidian District, Beijing 100088** | |
| | Telephone No. |

Form PCT/ISA/210 (second sheet) (July 2022)

**INTERNATIONAL SEARCH REPORT**
Information on patent family members

International application No.

**PCT/CN2024/096450**

| Patent document cited in search report | | | Publication date (day/month/year) | Patent family member(s) | Publication date (day/month/year) |
|---|---|---|---|---|---|
| CN | 116865294 | A | 10 October 2023 | None | |
| CN | 105226719 | A | 06 January 2016 | None | |
| CN | 112968451 | A | 15 June 2021 | None | |
| US | 11451065 | B1 | 20 September 2022 | None | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 202310702731X